# EUROPEAN PATENT SPECIFICATION

(11) **EP 3 819 963 B1**
(45) Date of publication and mention of the grant of the patent: **01.01.2025**
(21) Application number: 20206308.7
(22) Date of filing: 06.11.2020
(51) Int. Cl.: H01M 4/04, H01M 4/36, H01M 4/38, H01M 4/583, H01M 10/052, H01M 4/133, H01M 4/134, H01M 4/1393, H01M 4/1395, H01M 4/587, H01M 4/62

(54) **NEGATIVE ACTIVE MATERIAL FOR RECHARGEABLE LITHIUM BATTERY AND RECHARGEABLE LITHIUM BATTERY COMPRISING SAME**
NEGATIVES AKTIVMATERIAL FÜR WIEDERAUFLADBARE LITHIUMBATTERIE UND WIEDERAUFLADBARE LITHIUMBATTERIE DAMIT
MATÉRIAU ACTIF NÉGATIF POUR BATTERIE AU LITHIUM RECHARGEABLE ET BATTERIE AU LITHIUM RECHARGEABLE COMPRENANT CELUI-CI

(30) Priority: 07.11.2019 KR 20190142040
(43) Date of publication of application: 12.05.2021
(73) Proprietor: Samsung SDI Co., Ltd., Yongin-si, Gyeonggi-do 17084 (KR)
(72) Inventor: KIM, Young-Min, 17084 Gyeonggi-do (KR); SHIN, Changsu, 17084 Gyeonggi-do (KR); WON, Jongmin, 17084 Gyeonggi-do (KR); LEE, Dae-Hyeok, 17084 Gyeonggi-do (KR); KIM, Jaemyung, 17084 Gyeonggi-do (KR); NAH, Jaehou, 17084 Gyeonggi-do (KR)
(74) Representative: Taor, Simon Edward William

(56) References cited:
- EP-A1- 3 131 140
- EP-B1- 3 131 140
- WO-A1-2015/146864

## Description

### BACKGROUND OF THE INVENTION

### (a) Field of the Invention

This disclosure relates to a negative active material for a rechargeable lithium battery and a rechargeable lithium battery including the same.

### (b) Description of the Related Art

A rechargeable lithium battery has recently drawn attention as a power source for small portable electronic devices. The rechargeable lithium battery uses an organic electrolyte solution and thereby has twice or more higher a discharge voltage than a conventional battery using an alkali aqueous solution, and accordingly, has high energy density.

As for a positive active material of a rechargeable lithium battery, a lithium-transition metal oxide having a structure capable of intercalating lithium ions, such as LiCoO₂, LiMn₂O₄, LiNi₁₋ₓCoₓO₂ (0 < x < 1), and the like has been used.

As a negative active material, various carbon-based negative active materials such as artificial graphite, natural graphite, hard carbon, and the like have been mainly used. However, such a carbon-based negative active material has low capacity of about 360 mAh/g, and thus studies for a silicon-based negative active material having a capacity of 2500 mAh/g or more which is four or more times higher than the carbon-based negative active material have been actively investigated. However, silicon has severe volume expansion which may occur during the charging and the discharging (300% relative to graphite), compared to the carbon-based negative active material, particularly graphite, and it causes the side reaction with the electrolyte to severely occur, thereby consuming the electrolyte solution and resultantly deteriorating the cycle-life characteristic.

The above information disclosed in this Background section is only for enhancement of understanding of the background of the invention, and therefore it may contain information that does not form the prior art that is already known in this country to a person of ordinary skill in the art.

EP 3131140 discloses an anode active material for a lithium ion secondary battery; and a method for producing such an active material. The anode active material for a lithium ion secondary battery, the active material comprising a Si compound and a carbonaceous material or a carbonaceous material and graphite, is obtained by a method comprising the steps of: mixing a Si compound, a carbon precursor, and, as appropriate, graphite powder; performing granulation/compaction; pulverizing the mixture to form composite particles; firing the composite particles in an inert gas atmosphere; and subjecting the pulverized and conglobated composite powder or the fired powder to air classification.

### SUMMARY OF THE INVENTION

One embodiment provides a negative active material for a rechargeable lithium battery exhibiting suppressed volume expansion, and excellent initial efficiency and cycle-life characteristics.

Other embodiments provide a rechargeable lithium battery including a negative active material for a rechargeable lithium battery.

According to an aspect, there is provided a negative active material as set out in claim 1. Additional features are set out in claims 2 to 12. According to an aspect, there is provided a rechargeable lithium battery as set out in claim 13.

### BRIEF DESCRIPTION OF THE DRAWINGS

FIG. 1 is a drawing for defining sphericity of a negative active material.
FIG. 2 is a schematic view showing a structure of a rechargeable lithium battery according to one embodiment.
FIG. 3A is a 5000 times magnified SEM photograph of the first negative active material according to Example 1.
FIG. 3B is a 15,000 times magnified SEM photograph of the first negative active material according to Example 1.
FIG. 3C is a 50,000 times magnified SEM photograph of the first negative active material according to Example 1.
FIG. 4A is a 10,000 times magnified SEM photograph of the cross-section of the negative electrode according to Example 1 recorded by using a CP-SEM (controlled pressure scanning electron microscope).
FIG. 4B is a 100,000 magnified SEM photograph which largely show the spherical shape material shown in FIG. 4A.
FIG. 5 is a 5000 times magnified SEM photograph of the first negative active material according to Comparative Example 1.
FIG. 6A is a 50,000 time magnified SEM photograph of the cross-section of the negative electrode according to Comparative Example 1 recorded by using a CP-SEM (controlled pressure scanning electron microscope).
FIG. 6B is a 100,000 times magnified SEM photograph of the negative active material layer.
FIG. 7A is a 15,000 times magnified SEM photograph of the first negative active material according to Comparative Example 2.
FIG. 7B is a 50,000 times magnified SEM photograph of the first negative active material according to Comparative Example 2.

### DETAILED DESCRIPTION OF THE INVENTION

Hereinafter, embodiments are described in detail. However, these embodiments are exemplary, and do not limit the present invention, and the present invention is defined by the scope of the claims which will be described later.

A negative active material for a rechargeable lithium battery may include a Si-carbon composite. The Si-carbon composite may include Si nanoparticles and an amorphous carbon.

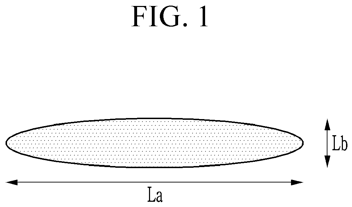

The sphericity (aspect ratio) of the negative active material may be about 0.7 or more, and in one embodiment, may be between about 0.7 and 1.0. In some embodiments, the sphericity may be about 1.0. The sphericity (or aspect ratio) refers to a ratio (Lb/La) of the length of the short axis to the length of the long axis, as shown in FIG. 1, if the negative active material has a spherical or oval shape. FIG. 1 illustrates, for example, a particle having an oval shape, but the negative active material of embodiments is not limited to the oval shape. Thus, if the sphericity is 1.0, that indicates a negative active material having substantially a completely spherical shape.

If the sphericity of the negative active material is about 0.7 or more, the surface area of the negative active material may be reduced, resulting in decreases in an area on which the negative active material is contacted with an electrolyte, or an area with which lithium reacts, so that the side reaction with the electrolyte may be reduced, and the reaction with lithium may also be reduced. In addition, the active material in the negative electrode allows uniform expansion, thereby reducing the volume expansion caused therefrom.

The effects owing to such a decrease in the surface area may be more effectively obtained from a negative active material having a specific surface area BET of about 10 m²/g or less, for example, about 0.5 m²/g to about 10 m²/g. If the specific surface area BET of the negative active material is about 10 m²/g or less, and according to one embodiment, about 0.5 m²/g to 10 m²/g, the contact with the electrolyte may be reduced to inhibit the side reaction, thereby helping to improve the performance and increasing the initial efficiency.

That is, the negative active material according to one embodiment having sphericity of about 0.7 or more, and a specific surface area BET of 10 m²/g or less, may be an active material with the reduced side reaction of the electrolyte and the reaction with lithium.

If only one of the sphericity and the specific surface area BET of the negative active material is not satisfied, it is not desirable in that the volume expansion of the active material may be increased, the initial efficiency may be reduced, or the cycle-life characteristics may be deteriorated.

In the negative active material, the Si nanoparticles may be primary particles, and the primary particles, that is, at least one of primary particles, may be agglomerated to form a secondary particle which may be included in the Si-carbon composite. Thus, the Si-carbon composite may include secondary particles in which the Si nanoparticles are agglomerated.

In one embodiment, the Si nanoparticles may have a flake shape, a spherical shape, and the like, but embodiments are not limited thereto. Furthermore, the secondary particles in which at least one of primary particles may be agglomerated may have a spherical shape.

In one embodiment, the amorphous carbon may be presented to cover a surface of the secondary particle. That is, the negative active material according to one embodiment may include a core including Si nanoparticles, and according to another embodiment, a secondary particle core in which at least one of primary particles being the Si nanoparticles is agglomerated, and an amorphous carbon surrounding the core. In one embodiment, the core indicates a region positioned inside of the active material, and when it is described in more detail, the core is surrounded with the amorphous carbon, so that it indicates a region which is not substantially exposed to outward. Thus, the core may be a region presented inside of the amorphous carbon surrounding the core.

Furthermore, the amorphous carbon may be filled between the primary particles, and the amorphous carbon is filled between the primary particles to resultantly cover the surface of the primary particles. As described above, when the amorphous carbon is filled between the primary particles, the pore volume of the negative active material is reduced to inhibit the side-reaction of the electrolyte and to act to buffer the expansion of the primary particles being the Si nanoparticles. Furthermore, the amorphous carbon filled between the primary particles serves as a binder to prevent breakage of the negative active material particles and to improve the conductivity.

The amorphous carbon may be soft carbon, hard carbon, mesophase pitch carbide, a sintered coke, or a combination thereof.

The Si nanoparticles may be of a flake type. That is, the Si particles may be of a flake type having a long axis and a short axis, and herein, the Si particles may have an aspect ratio (long axis/short axis, for example, width/thickness) of about 5 to about 20. When the aspect ratio of the Si particle is within the above range, the volume expansion of the Si nanoparticles may be suppressed, thereby improving the cycle-life characteristics and the initial efficiency of the battery.

The Si particles may have a particle diameter of about 10 nm to about 200 nm. The particle diameter may be an average particle diameter of the particle diameters. Herein, the average a particle diameter may be a particle diameter D50 which is measured by cumulative volume. Such a particle diameter D50 indicates an average particle diameter D50 where a cumulative volume is about 50 volume% in a particle distribution, when a definition is not otherwise provided. When the size of the Si nanoparticles is within the above range, the side reaction of the negative active material and the electrolyte may be suppressed and the expansion of the Si nanoparticles may be reduced, thereby improving the cycle-life characteristics and the initial efficiency of the battery.

Furthermore, when the Si nanoparticles are secondary particles in which at least one of primary particles is agglomerated, the particle diameter of the secondary particles may be about 2 µm to about 15 µm, or about 5 µm to about 10 µm. In addition, the particle diameter of the primary particles may be about 10 nm to about 200 nm. When the average particle diameter of the negative active material is within the above range, lithium ions may be easily distributed inside of the negative active material and the electrical resistance and rate-capability may be improved.

The average particle size D50 may be measured by a general technique which is well known to an ordinarily skilled person in the related art, for example, using a particle size analyzer, transmission electron microscope photography, or scanning electron microscope photography. Another method may be performed by measuring it using a measuring device with dynamic light scattering, analyzing data to count a number of particles relative to each particle size, and then calculating to obtain an average particle diameter D50.

In one embodiment, a full width at half maximum, FWHM(111), of a diffraction peak at a (111) plane found by X-ray diffraction of the Si particles using a CuKα ray may be about 0.3 degrees (°) to about 7 degrees (°). When the full width at half maximum, FWHM(111), of the Si particles is within the range, the cycle-life characteristics may be improved.

The X-ray diffraction analysis is produced under a measurement condition of 2θ = 40° to 50°, a scan speed (°/S) of 0.04 to 0.06, and a step size (°/step) of 0.01 to 0.03 by using a CuKα ray as a target ray.

The mixing ratio of the Si nanoparticle and the amorphous carbon may be about a 8:2 to 2:8 weight ratio, and in one embodiment, may be about a 7:3 to 5:5 weight ratio. In one embodiment, as the Si nanoparticles are presented as secondary particles in which they are agglomerated, in the negative active material, the mixing ratio of the Si nanoparticles and the amorphous carbon may resultantly also be a mixing ratio of the secondary particles and the amorphous carbon. When the mixing ratio of the Si nanoparticles and the amorphous carbon is within the above range, more excellent capacity, particularly, higher capacity relative to the crystalline carbon negative active material may be realized.

In addition, the amorphous carbon may be presented as a coating layer for coating the surface of the secondary particles, and alternatively, may be presented as a filling form between the primary particles, together with the coating layer form. Regardless of the presence form of filling the amorphous carbon between the primary particles or coating layer, the total amount of the amorphous carbon included in the negative active material may be about 20 wt% to about 80 wt% based on the total of 100 wt% of the negative active material.

In one embodiment, in case of presenting the amorphous carbon as the coating layer for coating the surface, the amorphous carbon may be presented at a thickness of about 1 nm to about 1000 nm, for example, about 30 nm to about 200 nm, on a surface of the secondary particles. When the thickness of the amorphous carbon is within the range, the conductivity of the negative active material may be improved and the contact with the electrolyte may be reduced, thereby effectively inhibiting the resistance increase due to the side reactant generation.

In one embodiment, the particle diameter of the negative active material may be about 40 µm or less, or may be about 2 µm to about 15 µm. When the particle diameter of the negative active material is within the range, the lithium ions are easily distributed inside of the negative active material, and the battery resistance and rate-capability characteristics may be improved.

The negative active material according to the following procedure may be prepared.

First of all, silicon particles may be prepared. The silicon particles may be nanoparticles, and in one embodiment, may be nanoparticles with a particle diameter of about 10 nm to about 200 nm. Such silicon particles of the nanoparticles may be obtained from a general technique for preparing nanoparticles, such as pulverization, etc. A full width at half maximum, FWHM(111), of a diffraction peak at a (111) plane found by X-ray diffraction of the Si particles using a CuKα ray may be about 0.3 degrees (°) to about 7 degrees (°).

The silicon particles may be dispersed in a solvent to prepare a dispersed liquid of the silicon particles. As the solvent, alcohols which do not oxidize silicon particles, and are easily volatilized, may be appropriately used, and examples thereof may be isopropyl alcohol, ethanol, methanol, butanol, or a combination thereof. The dispersed liquid of the silicon particles may have a concentration of about 10 wt% to about 30 wt%.

The obtained dispersion liquid of the silicon particles may be spray dried. During the process, the silicon particles with a nanometer (primary particle) size are agglomerated to prepare spherical Si secondary particles with a micrometer size. The secondary particles may include pores inside, that is, gaps between the primary particles. The spray-drying may be performed by controlling a nozzle type and an atmosphere to control the sphericity of the obtained negative active material. That is, as the nozzle, a two-fluid nozzle being capable of preparing fine particles by mixing liquid and vapor may be suitably used. In case of using the two-fluid nozzle, fine and spherical particles may be prepared and no additional pulverization is required as the prepared particle size is small, to maintain the spherical shape. If a disk-type nozzle for spraying while a rotator is rotated, is used, it is not desirable since a massive particles may be prepared, additional pulverization is required as the particle size is enlarged, and various shapes of particles such as spherical, oval, or donut shapes may be prepared.

Furthermore, the spray-drying may be suitably performed under a N₂ atmosphere, for example, a blowing amount of about 40 L/min to about 50 L/min of N₂, or of about 30 L/min to about 40 L/min of N₂. When the blowing amount of N₂ blowing during the spray-drying is within the range, the microparticles with a spherical shape having a predetermined size may be prepared. If the blowing amount of N₂ is less than about 30 L/min, it is not desirable since the sprayed products may be agglomerated again, and the prepared particle size is increased. If the blowing amount is about 50 L/min, the prepared particle size is very small, and the fine particles are largely prepared.

The spray-drying may be performed at about 120 °C to about 170 °C. When the spray-drying is performed in the temperature range, the spherical Si particles with a microsize may be sufficiently dried through the instant evaporation.

The Si secondary particles with a micrometer size, in which Si nano-sized primary particles are agglomerated, may be mixed with an amorphous carbon. Herein, the mixing ratio of the secondary particles and the amorphous carbon may be about an 80:20 to 20:80 weight ratio, or about a 60:40 to about 50:50 weight ratio.

The amorphous carbon precursor may be a polyimide resin, a furan resin, a phenol resin, a polyvinyl alcohol resin, a poly(meth)acrylic acid resin, polyurethane resin, a cellulose resin, an epoxy resin, a polystyrene resin, a petroleum pitch, coal pitch, green cokes, mesophase pitch, coal oil, petroleum heavy oil, cokes, or a combination thereof.

The obtained mixture may be compression-formed. The compression-formation may be under a pressure which is sufficient to maintain the Si secondary particles with a micrometer size to be a spherical shape, for example, about 20 MPa to about 150 MPa. Furthermore, the compression-formation may be performed for 1 minute to 5 minutes. The compression-formation allows firm adherence of the spherical Si secondary particles with a micrometer size to the amorphous carbon precursor, insertion of the amorphous carbon precursor between the primary particles, and the amorphous carbon precursor may be well inserted into the pores formed inside the secondary particles, so that the amorphous carbon may be between the primary particles in the final active material at a desired amount (desired thickness), and thus, the amorphous carbon may be formed as a coating layer on the surface of the secondary particles at a desired thickness. If the compress-formation is not performed, the adherence of the spherical secondary particles with the micrometer size to the amorphous carbon precursor is not firmly produced, and the amorphous carbon precursor is not well inserted between the primary particles and is largely presented on the surface of the secondary particles, so that the amorphous carbon is presented on the surface of the secondary particles in the final negative active material at an extremely thick thickness.

The obtained compress-formation product may be heat-treated to prepare a negative active material for a rechargeable lithium battery. The heat-treatment may be performed at about 400 °C to about 1200 °C, or about 700 °C to about 1000 °C. When the heat treatment is performed in the temperature range, the shape of the negative active material may be maintained as a spherical shape, and the amorphous carbon may be carbonized to improve the conductivity of the negative active material and the initial efficiency of the battery. Furthermore, the heat treatment may be performed under a N₂ atmosphere. The heat treatment allows conversion of the amorphous carbon precursor to amorphous carbon, thereby including it in the negative active material as an amorphous carbon.

According to one embodiment, a rechargeable lithium battery including a negative electrode, a positive electrode, and an electrolyte is provided.

The negative electrode may include a current collector and a negative active material layer formed on the current collector, and the negative active material includes the negative active material according to one embodiment.

The negative active material layer may further include a crystalline carbon negative active material. The crystalline carbon negative active material may be graphite such as unspecified shaped, sheet-shaped, flake-shaped, spherical-shaped or fiber-shaped natural graphite or artificial graphite.

When the negative active material layer includes the negative active material according to one embodiment as a first negative active material, and the crystalline carbon negative active material as a second negative active material, the mixing ratio of the first negative active material to the second negative active material may be about 1:99 to 20:80 by weight ratio. When the first negative active material is within the range, the battery capacity may be more effectively improved.

In the negative active material layer, the negative active material may be included in an amount of 95 wt% to 99 wt% based on the total weight of the negative active material layer.

The negative active material layer may include a negative active material and a binder, and may further include a conductive material. In the negative active material layer, an amount of the binder may be about 1 wt% to about 5 wt% based on the total weight of the negative active material layer. When the negative active material layer includes a conductive material, the negative active material layer includes about 90 wt% to about 98 wt% of the negative active material, about 1 wt% to about 5 wt% of the binder, and about 1 wt% to about 5 wt% of the conductive material.

The binder adheres negative active material particles to each other well and also adheres negative active materials to the current collector. The binder may include a non-water-soluble binder, a water-soluble binder, or a combination thereof.

The non-water-soluble binder may be an ethyl propylene copolymer, polyacrylonitrile, polystyrene, polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a styrene-butadiene rubber, an acrylated styrene-butadiene rubber, an acrylonitrile-butadiene rubber, an acryl rubber, a butyl rubber, a fluorine rubber, an ethylene oxide included polymer, polyvinylpyrrolidone, polyepichlorohydrin, polyphosphazene, an ethylene propylene copolymer, polyvinylpyridine, chloro sulfonated polyethylene, latex, a polyester resin, an acryl resin, a phenol resin, an epoxy resin, polyvinyl alcohol, or a combination thereof.

When the water-soluble binder is used as a negative electrode binder, a cellulose-based compound may be further used to provide viscosity as a thickener. The cellulose-based compound includes one or more of carboxymethyl cellulose, hydroxypropyl methyl cellulose, methyl cellulose, or alkali metal salts thereof. The alkali metals may be Na, K, or Li. The thickener may be included in an amount of 0.1 parts by weight to 3 parts by weight based on 100 parts by weight of the negative active material.

The conductive material is included to provide electrode conductivity, and any electrically conductive material may be used as a conductive material unless it causes a chemical change. Examples of the conductive material include a carbon-based material such as natural graphite, artificial graphite, carbon black, acetylene black, ketjen black, denka black, a carbon fiber, and the like; a metal-based material of a metal powder or a metal fiber including copper, nickel, aluminum, silver, and the like; a conductive polymer such as a polyphenylene derivative; or a mixture thereof..

The current collector may include one selected from a copper foil, a nickel foil, a stainless steel foil, a titanium foil, a nickel foam, a copper foam, a polymer substrate coated with a conductive metal, and a combination thereof, but embodiments are not limited thereto.

The negative electrode may be prepared by mixing a negative active material, a binder, and optionally a conductive material in a solvent to prepare an active material composition, and coating the composition on a current collector. The solvent may be water.

Such a negative electrode preparation is well known in the related art, so a detailed description will not be illustrated in the specification.

The positive electrode may include a positive current collector and a positive active material layer formed on the positive current collector.

The positive active material may include compounds that reversibly intercalate and deintercalate lithium ions (lithiated intercalation compounds). Specifically, it may include one or more composite oxides of a metal selected from cobalt, manganese, nickel, and a combination thereof, and lithium. More specific examples may be compounds represented by one of the following chemical formulae. LiₐA_{1-b}X_{b}D₂ (0.90 ≤ a ≤1.8, 0 ≤ b ≤ 0.5); LiₐA_{1-b}X_{b}O_{2-c}D_{c} (0.90 ≤ a ≤ 1.8, 0 ≤ b ≤ 0.5, 0 ≤ c ≤ 0.05); LiₐE_{1-b}X_{b}O_{2-c}O_{c} (0.90 ≤ a ≤1.8, 0 ≤ b ≤ 0.5, 0 ≤ c ≤ 0.05); LiₐE_{2-b}X_{b}O_{4-c}D_{c} (0.90 ≤ a ≤1.8, 0 ≤ b ≤ 0.5, 0 ≤ c ≤ 0.05); LiₐNi_{1-b-c}Co_{b}X_{c}D_{α} (0.90 ≤ a ≤ 1.8, 0 ≤ b ≤ 0.5, 0 ≤ c ≤ 0.5, 0 ≤ α ≤ 2); LiₐNi_{1-b-c}Co_{b}X_{c}O_{2-α}T_{α} (0.90 ≤ a ≤ 1.8, 0 ≤ b ≤ 0.5, 0 ≤ c ≤ 0.5, 0 ≤ α < 2); LiₐNi_{1-b-c}Co_{b}X_{c}O_{2-α}T₂ (0.90 ≤ a ≤ 1.8, 0 ≤ b ≤ 0.5, 0 ≤ c ≤ 0.5, 0 ≤ α < 2); LiₐNi_{1-b-c}Mn_{b}X_{c}D_{α} (0.90 ≤ a ≤ 1.8, 0 ≤ b ≤ 0.5, 0 ≤ c ≤ 0.5, 0 ≤ α ≤ 2); LiₐNi_{1-b-c}Mn_{b}X_{c}O_{2-α}T_{α} (0.90 ≤ a ≤ 1.8, 0 ≤ b ≤ 0.5, 0 ≤ c ≤ 0.5, 0 ≤ α ≤ 2); LiₐNi_{1-b-c}Mn_{b}X_{c}O_{2-α}T₂ (0.90 ≤ a ≤ 1.8, 0 ≤ b ≤ 0.5, 0 ≤ c ≤ 0.5, 0 ≤ α ≤ 2); LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤ 0.5, 0.001 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); QO₂; QS₂; LiOS₂; V₂O₅; LiV₂O₅; LiZO₂; LiNiVO₄; Li_{(3-f)}J₂ PO₄₃ (0 ≤ f ≤ 2); Li_{(3-f)}Fe₂ PO₄₃ (0 ≤ f ≤ 2); and LiₐFePO₄ (0.90 ≤ a ≤ 1.8).

In the chemical formulae, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound. For example, the method may include any coating method such as spray coating, dipping, and the like, but is not illustrated in more detail since it is well-known in the related field.

In the positive electrode, an amount of the positive active material may be 90 wt% to 98 wt% based on the total weight of the positive active material layer.

In one embodiment, the positive active material layer may further include a binder and a conductive material. Herein, each amount of the binder and the conductive material may be about 1 wt% to about 5 wt%, respectively, based on a total amount of the positive active material layer.

The binder improves binding properties of positive active material particles with one another and with a current collector. Examples of the binder may be polyvinyl alcohol, carboxymethyl cellulose, hydroxypropyl cellulose, diacetyl cellulose, polyvinylchloride, carboxylated polyvinyl chloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but embodiments are not limited thereto.

The conductive material is included to provide electrode conductivity. Any electrically conductive material may be used as a conductive material unless it causes a chemical change in a battery. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may be an aluminum foil, a nickel foil, or a combination thereof, but embodiments are not limited thereto.

The positive electrode may be prepared mixing a positive active material, a binder, and optionally a conductive material in a solvent to prepare an active material composition and coating the active material composition on a current collector. Such a positive electrode preparation is well known in the related art, and the detailed description is not illustrated in the specification. The solvent may be N-methylpyrrolidone, but embodiments are not limited thereto.

The electrolyte may include a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, t-butyl acetate, methylpropionate, ethylpropionate, propylpropionate, γ -butyrolactone, decanolide, valerolactone, mevalonolactone, caprolactone, and the like. The ether-based solvent may include dibutyl ether, tetraglyme, diglyme, dimethoxyethane, 2-methyltetrahydrofuran, tetrahydrofuran and the like. The ketone-based solvent may include cyclohexanone and the like. The alcohol-based solvent may include ethanol, isopropyl alcohol, and the like and the aprotic solvent may include nitriles such as R-CN (wherein R is a hydrocarbon group having a C2 to C20 linear, branched, or cyclic structure and may include a double bond, an aromatic ring, or an ether bond) and the like, dioxolanes such as 1,3-dioxolane and the like, and sulfolanes and the like.

The non-aqueous organic solvent may be used alone or in a mixture. When the organic solvent is used in a mixture, the mixture ratio may be controlled in accordance with a desirable battery performance.

The carbonate-based solvent may desirably be a mixture of a cyclic carbonate and a chain carbonate. In this case, the cyclic carbonate and the chain carbonate may be mixed and used in a volume ratio of 1: 1 to 1: 9, such that the performance of the electrolyte may be improved.

When the non-aqueous organic solvent is used in a mixture, a mixed solvent of a cyclic carbonate and a chain carbonate; a mixed solvent of a cyclic carbonate and a propionate-based solvent; or a mixed solvent of a cyclic carbonate, a chain carbonate, and a propionate-based solvent may be used. The propionate-based solvent may be methyl propionate, ethyl propionate, propyl propionate, or a combination thereof.

Herein, when the cyclic carbonate and the chain carbonate or the cyclic carbonate and the propionate-based solvent are mixed, they may be mixed in a volume ratio of about 1:1 to about 1:9, and thus performance of an electrolyte solution may be improved. In addition, when the cyclic carbonate, the chain carbonate, and the propionate-based solvent are mixed, they may be mixed in a volume ratio of about 1:1:1 to about 3:3:4. The mixing ratios of the solvents may be appropriately adjusted according to desirable properties.

The non-aqueous organic solvent may further include an aromatic hydrocarbon-based organic solvent in addition to the carbonate-based solvent. Herein, the carbonate-based solvent and the aromatic hydrocarbon-based organic solvent may be mixed in a volume ratio of about 1:1 to about 30:1.

The aromatic hydrocarbon-based organic solvent may be an aromatic hydrocarbon-based compound of Chemical Formula 1.

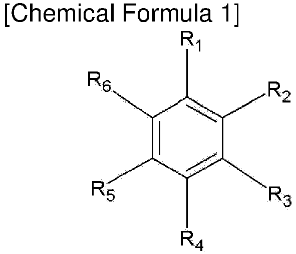

In Chemical Formula 1, R₁ to R₆ are the same or different and are selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate or an ethylene carbonate-based compound represented by Chemical Formula 2 as an additive for improving the cycle-life of a battery.

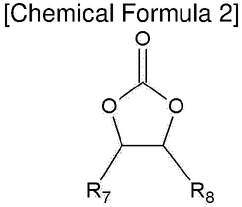

In Chemical Formula 2, R₇ and R₈ are the same or different and are selected from hydrogen, a halogen, a cyano group (CN), a nitro group (NO₂), and a fluorinated C1 to C5 alkyl group, provided that at least one of R₇ and R₈ is a halogen, a cyano group (CN), a nitro group (NO₂), or a fluorinated C1 to C5 alkyl group, and both of R₇ and R₈ are not hydrogen.

Examples of the ethylene carbonate-based compound may be difluoro ethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving the cycle-life may be used within an appropriate range.

The electrolyte may further include vinylethylene carbonate, propane sultone, succinonitrile, or a combination thereof, and the amount thereof may be suitably controlled.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂ (wherein, x and y are a natural number, for example, an integer of 0 to 20), lithium difluoro(bisoxolato) phosphate, LiCI, Lil, LiB(C₂O₄)₂ (lithium bis(oxalato) borate: LiBOB), and and lithium difluoro(oxalato) borate (LiDFOB). The lithium salt may be used in a concentration ranging from 0.1 M to 2.0 M. When the lithium salt is included at the above concentration range, an electrolyte may have excellent performance and lithium ion mobility due to optimal electrolyte conductivity and viscosity.

A separator may be disposed between the positive electrode and the negative electrode depending on a type of the lithium secondary battery. Such a separator may include polyethylene, polypropylene, polyvinylidene fluoride, and multi-layers thereof such as a polyethylene/polypropylene double-layered separator, a polyethylene/polypropylene/polyethylene triple-layered separator, a polypropylene/polyethylene/polypropylene triple-layered separator, and the like.

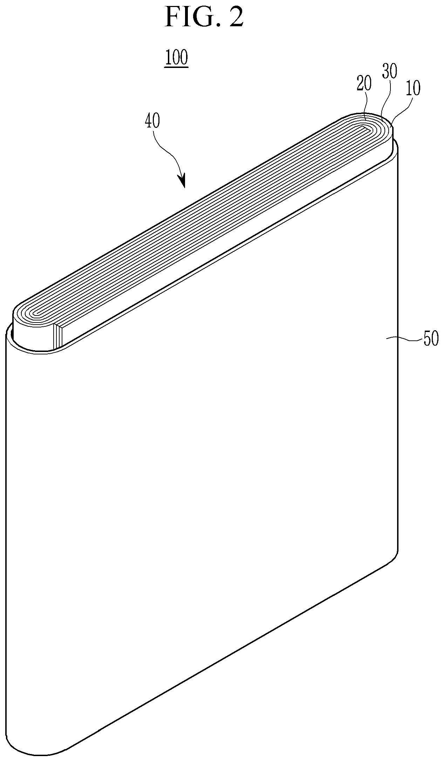

FIG. 2 is an exploded perspective view of a lithium secondary battery according to an embodiment. The lithium secondary battery according to an embodiment is illustrated as a prismatic battery, but embodiments are not limited thereto and may include variously-shaped batteries such as a cylindrical or pouch-type battery.

Referring to FIG. 2, a lithium secondary battery 100 according to an embodiment includes an electrode assembly 40 manufactured by winding a separator 30 interposed between a positive electrode 10 and a negative electrode 20, and a case 50 housing the electrode assembly 40. The positive electrode 10, the negative electrode 20, and the separator 30 may be impregnated with an electrolyte solution (not shown).

Hereinafter, examples of the present invention and comparative examples are described. These examples, however, are not in any sense to be interpreted as limiting the scope of the invention.

### (Example 1)

Si particles were pulverized to prepare Si nanoparticles having an average particle diameter D50 of 100 nm. The Si nanoparticles were of a flake type and had an aspect ratio (width/thickness) of 20. Furthermore, a full width at half maximum, FWHM(111), of a diffraction peak of the Si nanoparticle was measured by X-ray diffraction using a CuKα ray and the result was 1.11 degrees (°).

The prepared Si nanoparticles were added to an isopropyl alcohol solvent to prepare a liquid of Si particles with a concentration of 15 wt%.

The Si particle-included liquid was spray-dried at 120 °C while N₂ of 50 L/min of a flowing amount was blown, using a two-fluid nozzle to prepare secondary particles of an average particle diameter D50 of 6 µm in which the Si nano-sized primary particles with an average particle diameter D50 of 100 nm were agglomerated.

The prepared secondary particle of 40 wt% and a petroleum pitch of 60 wt% were mixed and then the mixture was compress-formed under a 20 MPa pressure for 3 minutes.

The obtained compress-formation product was heat-treated at 1000 °C under a N₂ atmosphere to prepare a first negative active material.

The prepared first negative active material included secondary particles with an average particle diameter D50 of 6 µm in which the Si nano-sized primary particles with an average particle diameter D50 of 100 nm were agglomerated, and a soft carbon amorphous carbon coating layer was formed on the exterior of the secondary particle by coating it on the surface of the secondary battery. Furthermore, the first negative active material included soft carbon as an amorphous carbon filled between the primary particles. The amounts of the Si nanoparticles, that is, the secondary particles was 60 wt% based on the total of 100 wt% of the first negative active material, and the amount of the amorphous carbon was 40 wt% based on the total of 100 wt% of the first negative active material. Furthermore, the amorphous carbon coating layer coated on the surface of the secondary particles had a thickness of 30 nm. The produced first negative active material has a BET specific surface area of 3.2 m²/g.

A mixed active material of the first negative active material and a natural graphite second negative active material (15 : 83 weight ratio) of 98 wt%, a styrene-butadiene rubber binder at 1 wt% and carboxymethyl cellulose as an agent for increasing viscosity at 1 wt% were mixed in a water solvent to prepare a negative active material slurry. The produced negative active material slurry was coated on a Cu current collector, dried, and compressed to produce a negative electrode including a negative active material layer formed on the current collector.

Using the negative electrode, a lithium metal counter electrode and an electrolyte, a half-cell having a capacity of 500 mAh/g was fabricated. As the electrolyte, a 1.5M LiPF₆ dissolved in a mixed solvent of ethylene carbonate, dimethyl carbonate and ethyl methyl carbonate (20:40:40 volume ratio) was used.

### (Example 2)

A first active material was prepared by the same procedure as in Example 1, except that the spray-drying was performed by flowing N₂ at a blowing amount of 45 L/min.

The prepared first negative active material included secondary particles with an average a particle diameter D50 of 5.5 µm in which the Si nano-sized primary particles with an average a particle diameter D50 of 100 nm were agglomerated, and a soft carbon amorphous carbon coating layer on the exterior of the secondary particle by coating it on the surface of the secondary battery. Furthermore, the first negative active material included soft carbon as an amorphous carbon filled between the primary particles. The amounts of the Si nanoparticles, that is, the secondary particles, was 60 wt% based on the total of 100 wt% of the first negative active material, and the amount of the amorphous carbon was 40 wt% based on the total of 100 wt% of the first negative active material. Furthermore, the amorphous carbon coating layer coated on the surface of the secondary particle had a thickness of 30 nm. The produced first negative active material has a BET specific surface area of 2.7 m²/g.

A mixed active material of the first negative active material and a natural graphite second negative active material (15 : 83 weight ratio) at 98 wt%, a styrene-butadiene rubber binder at 1 wt% and carboxymethyl cellulose as an agent for increasing viscosity at 1 wt% were mixed in a water solvent to prepare a negative active material slurry. The produced negative active material slurry was coated on a Cu current collector, dried, and compressed to produce a negative electrode including a negative active material layer formed on the current collector.

Using the negative electrode, a lithium metal counter electrode and an electrolyte, a half-cell was fabricated. As the electrolyte, 1.5M LiPF₆ dissolved in a mixed solvent of ethylene carbonate, dimethyl carbonate, and ethyl methyl carbonate (20:40:40 volume ratio) was used.

### (Example 3)

A first active material was prepared by the same procedure as in Example 1, except that the spray-drying was performed by flowing N₂ at a blowing amount of 40 L/min.

The prepared first negative active material included secondary particles with an average particle diameter D50 of 5 µm in which the Si nano-sized primary particles with an average particle diameter D50 of 100 nm were agglomerated, and a soft carbon as an amorphous carbon coating layer on the exterior of the secondary particles by coating it on the surface of the secondary battery. Furthermore, the first negative active material included soft carbon as an amorphous carbon filled between the primary particles. The amounts of the Si nanoparticles, that is, the secondary particles was 60 wt% based on the total 100 wt% of the first negative active material, and the amount of the amorphous carbon was 40 wt% based on the total 100 wt% of the first negative active material. Furthermore, the amorphous carbon coating layer coated on the surface of the secondary particles had a thickness of 30 nm. The produced first negative active material has a BET specific surface area of 2.7 m²/g.

A mixed active material of the first negative active material and a natural graphite second negative active material (15:83 weight ratio) at 98 wt%, a styrene-butadiene rubber binder at 1 wt%, and carboxymethyl cellulose as an agent for increasing viscosity at 1 wt% were mixed in a water solvent to prepare a negative active material slurry. The produced negative active material slurry was coated on a Cu current collector, dried, and compressed to produce a negative electrode including a negative active material layer formed on the current collector.

Using the negative electrode, a lithium metal counter electrode, and an electrolyte, a half-cell was fabricated. As the electrolyte, 1.5M LiPF₆ dissolved in a mixed solvent of ethylene carbonate, dimethyl carbonate and ethyl methyl carbonate (20:40:40 volume ratio) was used.

### (Comparative Example 1)

A spray-drying was performed by flowing N₂ of a blowing amount of 45 L/min using a disk-type nozzle, instead of the two-fluid nozzle. The obtained spray product was secondary particles with an average particle diameter D50 of 30 µm in which primary particles with an average particle diameter D50 of 100 nm were agglomerated. A first negative active material was prepared by the same procedure as in Example 1, except that the obtained spray product was pulverized with a pulverizer and the pulverized product was mixed with a petroleum pitch.

The prepared first negative active material included secondary particles with an average a particle diameter D50 of 5.5 µm in which the Si nano-sized primary particles with an average particle diameter D50 of 100 nm were agglomerated, and a soft carbon amorphous carbon coating layer on the exterior of the secondary particle by coating it on the surface of the secondary battery. Furthermore, the first negative active material included soft carbon amorphous carbon filled between the primary particles. The amounts of the Si nanoparticles, that is, the secondary particles was 60 wt% based on the total of 100 wt% of the first negative active material, and the amount of the amorphous carbon was 40 wt% based on the total of 100 wt% of the first negative active material.

The produced first negative active material has a BET specific surface area of 11.5 m²/g.

### (Comparative Example 2)

A secondary particle with an average particle diameter D50 of 6 µm in which Si nano-sized primary particles with an average particle diameter D50 of 100 nm were agglomerated, as the same procedure as in Example 1.

Regarding the secondary particles, chemical vapor deposition (CVD) was performed using methane gas at 1000 °C to prepare a first negative active material.

The prepared first negative active material included secondary particles with an average particle diameter D50 of 6 µm in which the Si nano-sized primary particles with an average particle diameter D50 of 100 nm were agglomerated, and a soft carbon as an amorphous carbon coating layer formed on the exterior of the secondary particle by coating it on the surface of the secondary battery. Furthermore, the first negative active material included soft carbon as an amorphous carbon filled between the primary particles. The amounts of the Si nanoparticles, that is, the secondary particles was 60 wt% based on the total of 100 wt% of the first negative active material, and the amount of the amorphous carbon was 40 wt% based on the total of 100 wt% of the first negative active material. Furthermore, the amorphous carbon coating layer coated on the surface of the secondary particles had a thickness of 30 nm. The produced first negative active material has a BET specific surface area of 18.2 m²/g.

### * SEM Measurement

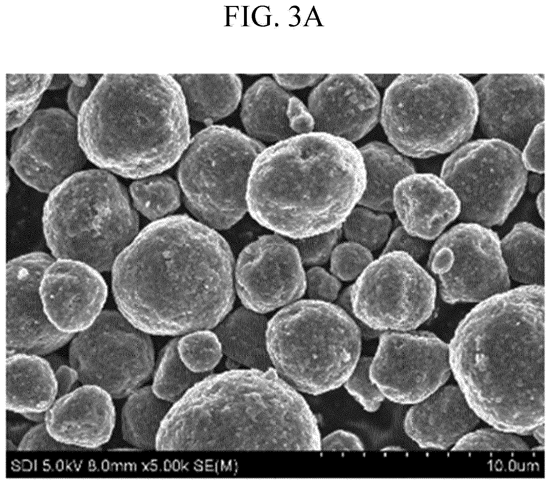

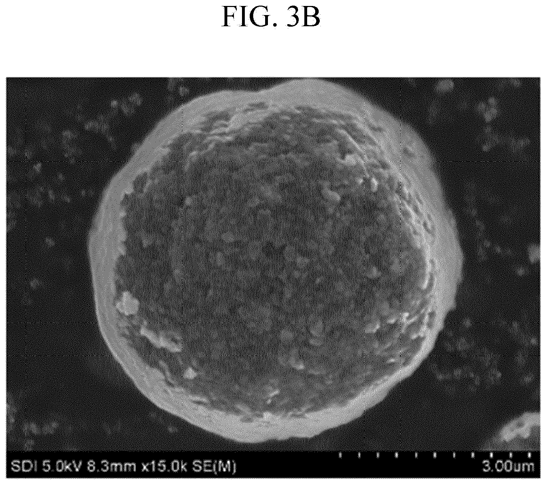

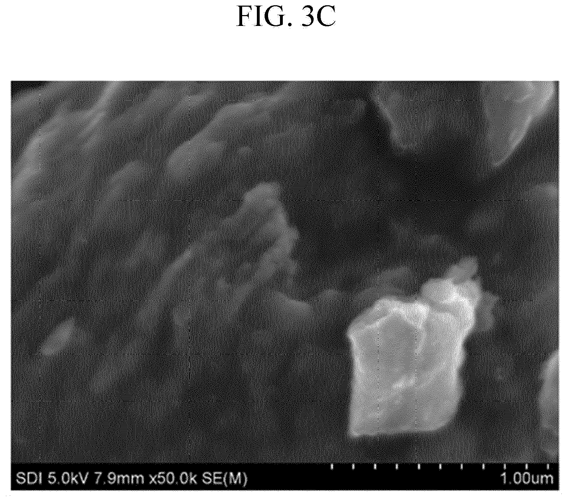

Regarding the shape and the surface of the first negative active material of Example 1, a 5000 times SEM photograph, a 15,000 times SEM photograph, and a 50,000 times SEM photograph were measured The results are shown in FIG. 3A, FIG. 3B, and FIG. 3C. As shown in FIG. 3A and FIG. 3B, the first negative active material according to Example 1 was a spherical negative active material, and had the secondary particles in which the Si nanoparticles with a nanometer size were agglomerated.

As shown in FIG. 3C, the negative active material according to Example 1 has a smooth surface.

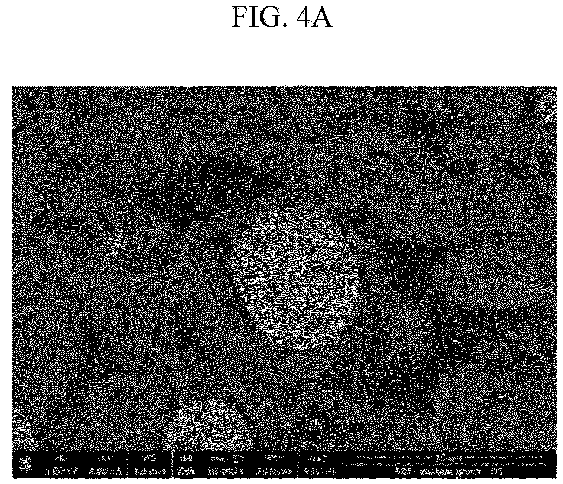

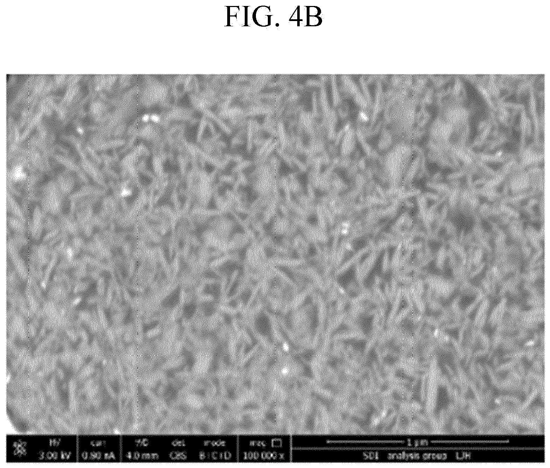

The SEM photograph of the cross-section was obtained by cutting the negative electrode of Example 1, with a CP-SEM (controlled pressure scanning electron microscope). The 10,000 times SEM for the negative active material layer is shown in FIG. 4A. A 100,000 times SEM photograph in which the spherical material shown in FIG. 4A as a bright color (white color) was magnified, is shown in FIG. 4B. The spherical material shown in FIG. 4A as a bright color was the first active material, and the flake-type material shown around the material as a black color was a graphite second active material. Furthermore, as shown in FIG. 4B in which the spherical material was shown, it can be clearly shown that the flake-type Si primary particles were agglomerated to prepare the secondary particles, and the shape of the negative active material was well maintained in the negative electrode as a spherical shape. It can be seen that the average particle diameter D50 of the Si primary particles was 100 nm, from FIG. 4B.

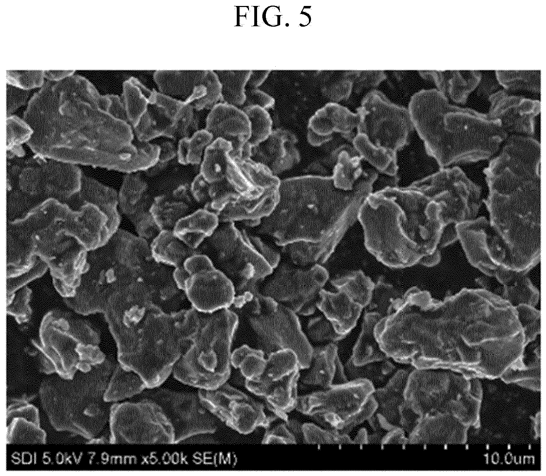

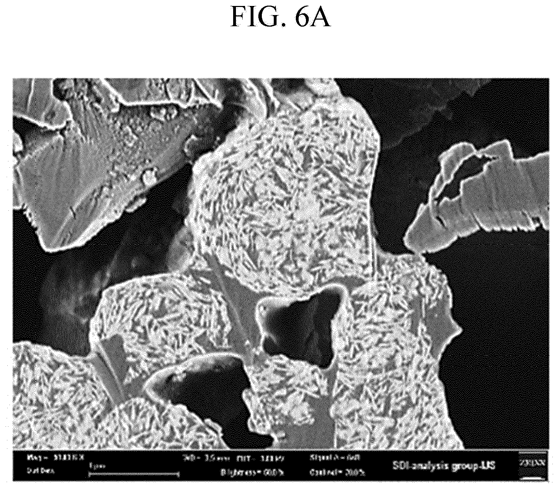

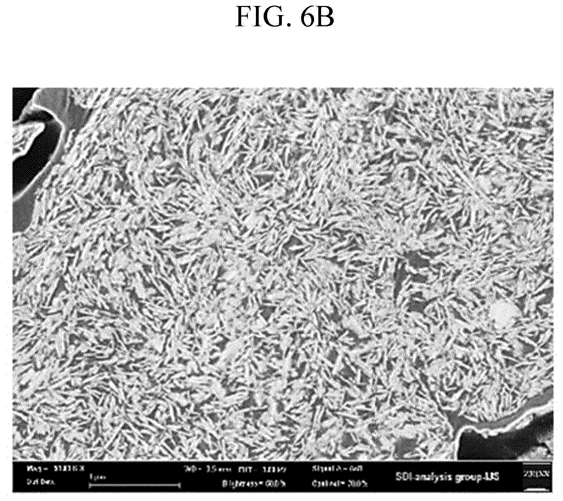

The 5000 times SEM photograph of the shape and the surface of the first negative active material of Comparative Example 1 is shown in FIG. 5. The SEM photograph was measured by cutting the negative electrode of Comparative Example 1, with a CP-SEM (controlled pressure scanning electron microscope). A 50,000 times SEM photograph of the negative active material layer is shown in FIG. 6A, and a 100,000 times SEM photograph of the negative active material layer is shown in FIG. 6B.

As shown in FIG. 5, the first negative active material using the disk-type nozzle according to Comparative Example 1 had an irregular shape. This is considered to be because the massive secondary particles with the average particle diameter of 30 µm were prepared so that the pulverization was performed to reduce the particle size. As shown in FIG. 6A and FIG. 6B, the first negative active material of Comparative Example 1 had the secondary particles in which the primary particles were agglomerated, in the negative electrode, but the irregular shape was maintained, not any spherical shape.

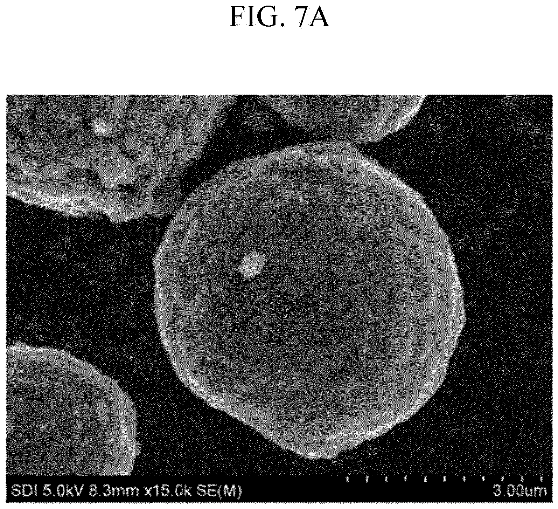

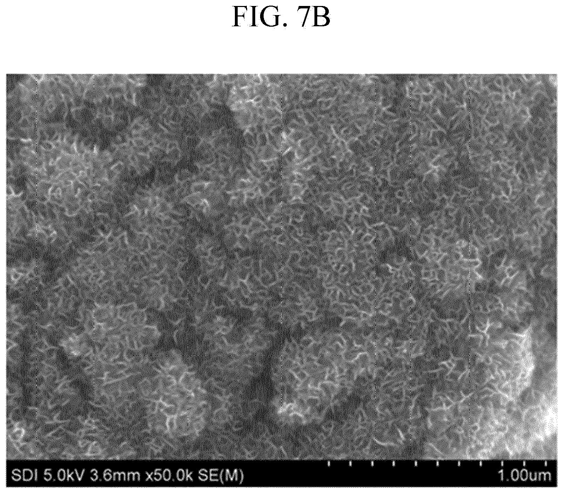

The 15,000 times SEM photograph and 5000 times SEM photograph of the shape and the surface of the first negative active material of Comparative Example 2 is shown in FIG. 7A and FIG. 7B, respectively. As shown in FIG. 7A, the negative active material of Comparative Example 2 had the slightly similar SEM photograph to FIG. 3A, so that it is considered that the negative active material of Comparative Example 2 was a spherical negative active material and had the secondary particles in which the primary particles with nanometer sizes were agglomerated. However, from FIG. 7B showing the 50,000 times SEM photograph, the surface was very crude, compared to the first active material having the smooth surface of Example 1.

### * Measurement for sphericity

The sphericity of the first negative active materials according to Examples 1 to 3 and Comparative Examples 1 and 2 were identified by a SEM and obtained by averaging the ratio (Lb/La) of the length of the short axis (Lb) to the length of the long axis (La). The results are shown in Table 1.

### * Measurement of initial efficiency

The half-cells according to Examples 1 to 3 and Comparative Examples 1 and 2 were charged and discharged at 0.1C once, and the initial efficiency which was the ratio of the discharge capacity to the charge capacity was measured. The results are shown in Table 1.

### * Measurement of battery expansion rate

The half-cells according to Examples 1 to 3 and Comparative Examples 1 and 2 were charged and discharged at 0.5C 100 times. The battery thickness before charging and discharging and the battery thickness after charging and discharging were measured, respectively, and an expansion rate was determined using Equation 1. The results are shown in Table 1. Expansion rate (%) = [(battery thickness after charging and discharging-battery thickness before charging and discharging)/battery thickness before charging and discharging] * 100

### * Evaluation of cycle-life

The half-cells according to Examples 1 to 3 and Comparative Examples 1 and 2 were charged and discharged at 0.5C 100 times, and the ratio of the 100^{th} discharge capacity to the 1st discharge capacity was determined. The results are shown in Table 1, as capacity retention.

**Table 1**

| | Sphericity of first negative active material (short axis/ long axis) | BET specific surface area (m²/g) | Initial efficiency (%) | Expansion rate (%) | Capacity retention (%) |
|---|---|---|---|---|---|
| Comparative Example 1 | 0.61 | 11.5 | 88.6 | 41 | 68.7 |
| Comparative Example 2 | 0.85 | 18.2 | 88.3 | 52 | 51.3 |
| Example 1 | 0.86 | 3.2 | 90.5 | 23 | 82.9 |
| Example 2 | 0.81 | 2.7 | 90.7 | 22 | 83.7 |
| Example 3 | 0.74 | 7.1 | 90.1 | 27 | 81.2 |

As shown in Table 1, the half-cells according to Examples 1 to 3 using the first negative active material having the sphericity of 0.7 or more and the BET specific surface area of 10 m²/g or less exhibited excellent initial efficiency and capacity retention, and very low expansion rate.

Otherwise, the half-cell according to Comparative Example 1 using the first negative active material having the sphericity of less than 0.7 and the BET specific surface area of more than 10 m²/g exhibited very low initial efficiency, significantly deteriorated capacity retention, and very high expansion rate.

Furthermore, the half-cell according to Comparative Example 2 using the first negative active material having the sphericity of 0.7 or more, but the very high BET specific surface area of 18.2 m²/g, exhibited slightly low initial efficiency, a very high expansion rate, and the lowest capacity retention.

As discussed, embodiments can provide a negative active material for a rechargeable lithium battery, comprising a Si-carbon composite comprising Si nanoparticles and an amorphous carbon, wherein the negative active material has sphericity (or aspect ratio) of 0.7 or more and a specific surface area BET of 10 m²/g or less.

The sphericity (or aspect ratio) may be from 0.7 to 1.

In some embodiments, the Si nanoparticles have a spherical shape.

The Si nanoparticles may have a flake type. That is, the Si particles may be of a flake type having a long axis and a short axis, and the Si particles may have an aspect ratio (long axis/short axis, for example, width/thickness) of about 5 to about 20. The flake type Si nanoparticles may be agglomerated with the amorphous carbon to form the Si-carbon composite.

While this invention has been described in connection with what is presently considered to be practical exemplary embodiments, it is to be understood that the invention is not limited to the disclosed embodiments. On the contrary, it is intended to cover various modifications and equivalent arrangements included within the scope of the appended claims.

## Claims

1. A negative active material for a rechargeable lithium battery, comprising
a Si-carbon composite comprising Si nanoparticles and an amorphous carbon,
wherein the negative active material has sphericity,measured according to the description, of 0.7 or more and a specific surface area BET of 10 m²/g or less, ,measured according to the description, and
wherein the Si nanoparticles are a flake type.

2. The negative active material for a rechargeable lithium battery of claim 1, wherein the sphericity ,measured according to the description, is from 0.7 to 1.

3. The negative active material for a rechargeable lithium battery of claim 1, wherein the specific surface area BET ,measured according to the description, is about 0.5 m²/g to 10 m²/g,

4. The negative active material for a rechargeable lithium battery of any one of claims 1 to 3, wherein the Si nanoparticles have a spherical shape.

5. The negative active material for a rechargeable lithium battery of any one of claims 1 to 4, wherein the Si-carbon composite includes secondary particles that are agglomerated Si nanoparticles.

6. The negative active material for a rechargeable lithium battery of claim 5, wherein the amorphous carbon covers a surface of the secondary particles.

7. The negative active material for a rechargeable lithium battery of claim 5 or 6, wherein the amorphous carbon is filled between the Si nanoparticles.

8. The negative active material for a rechargeable lithium battery of any one of claims 1 to 7, wherein the amorphous carbon covers a surface of the Si nanoparticles.

9. The negative active material for a rechargeable lithium battery of any one of claims 1 to 8, wherein the Si nanoparticles have a particle diameter of about 10 nm to about 200 nm.

10. The negative active material for a rechargeable lithium battery of any one of claims 1 to 9, wherein a full width at half maximum, FWHM(111) of a diffraction peak at a (111) plane found by X-ray diffraction of the Si particles using a CuKα ray may be about 0.3 degrees (°) to about 7 degrees (°).

11. The negative active material for a rechargeable lithium battery of any one of claims 1 to 10, wherein the negative active material has a particle diameter ,measured according to the description, of about 40 µm or less.

12. The negative active material for a rechargeable lithium battery of any one of claims 1 to 11, wherein a mixing ratio of the Si nanoparticles and the amorphous carbon is about 8:2 to about 2:8 by weight ratio.

13. A rechargeable lithium battery, comprising:
a negative electrode (20) comprising the negative active material of one of Claims 1 to 12;
a positive electrode (10); and
an electrolyte

## Patentansprüche

1. Negatives Aktivmaterial für eine wiederaufladbare Lithiumbatterie, umfassend
ein Si-Kohlenstoff-Verbundmaterial, das Si-Nanopartikel und einen amorphen Kohlenstoff umfasst,
wobei das negative Aktivmaterial Sphärizität, gemessen gemäß der Beschreibung, von 0,7 oder mehr und einen spezifischen Oberflächenbereich BET von 10 m²/g oder weniger, gemessen gemäß der Beschreibung, aufweist, und
wobei die Si-Nanopartikel ein Flockentyp sind.

2. Negatives Aktivmaterial für eine wiederaufladbare Lithiumbatterie nach Anspruch 1, wobei die Sphärizität, gemessen gemäß der Beschreibung, von 0,7 bis 1 ist.

3. Negatives Aktivmaterial für eine wiederaufladbare Lithiumbatterie nach Anspruch 1, wobei der spezifische Oberflächenbereich BET, gemessen gemäß der Beschreibung, etwa 0,5 m²/g bis 10 m²/g ist.

4. Negatives Aktivmaterial für eine wiederaufladbare Lithiumbatterie nach einem der Ansprüche 1 bis 3, wobei die Si-Nanopartikel eine sphärische Form aufweisen.

5. Negatives Aktivmaterial für eine wiederaufladbare Lithiumbatterie nach einem der Ansprüche 1 bis 4, wobei das Si-Kohlenstoff-Verbundmaterial Sekundärpartikel beinhaltet, die agglomerierte Si-Nanopartikel sind.

6. Negatives Aktivmaterial für eine wiederaufladbare Lithiumbatterie nach Anspruch 5, wobei der amorphe Kohlenstoff eine Oberfläche der Sekundärpartikel bedeckt.

7. Negatives Aktivmaterial für eine wiederaufladbare Lithiumbatterie nach Anspruch 5 oder 6, wobei der amorphe Kohlenstoff zwischen den Si-Nanopartikeln gefüllt ist.

8. Negatives Aktivmaterial für eine wiederaufladbare Lithiumbatterie nach einem der Ansprüche 1 bis 7, wobei der amorphe Kohlenstoff eine Oberfläche der Si-Nanopartikel bedeckt.

9. Negatives Aktivmaterial für eine wiederaufladbare Lithiumbatterie nach einem der Ansprüche 1 bis 8, wobei die Si-Nanopartikel einen Partikeldurchmesser von etwa 10 nm bis etwa 200 nm aufweisen.

10. Negatives Aktivmaterial für eine wiederaufladbare Lithiumbatterie nach einem der Ansprüche 1 bis 9, wobei eine Halbwertsbreite FWHM (111) eines Beugungspeaks in einer (111)-Ebene, gefunden durch Röntgenbeugung der Si-Partikel unter Verwendung eines CuKα-Strahls, etwa 0,3 Grad (°) bis etwa 7 Grad (°) sein kann.

11. Negatives Aktivmaterial für eine wiederaufladbare Lithiumbatterie nach einem der Ansprüche 1 bis 10, wobei das negative Aktivmaterial einen Partikeldurchmesser, gemessen gemäß der Beschreibung, von etwa 40 µm oder weniger aufweist.

12. Negatives Aktivmaterial für eine wiederaufladbare Lithiumbatterie nach einem der Ansprüche 1 bis 11, wobei ein Mischverhältnis der Si-Nanopartikel und des amorphen Kohlenstoffes etwa 8:2 bis etwa 2:8 nach Gewichtsverhältnis ist.

13. Wiederaufladbare Lithiumbatterie, umfassend:
eine negative Elektrode (20), die das negative Aktivmaterial nach einem der Ansprüche 1 bis 12 umfasst,
eine positive Elektrode (10); und
einen Elektrolyten.

## Revendications

1. Matériau actif négatif pour une batterie au lithium rechargeable, comprenant
un composite Si-carbone comprenant des nanoparticules de Si et un carbone amorphe,
ledit matériau actif négatif possédant une sphéricité, mesurée selon la description, supérieure ou égale à 0,7 et une
surface spécifique BET inférieure ou égale à 10 m^{2/}g, mesurée selon la description, et
lesdites nanoparticules de Si étant d'un type paillettes.

2. Matériau actif négatif pour une batterie au lithium rechargeable de la revendication 1, ladite sphéricité, mesurée selon la description, allant de 0,7 à 1.

3. Matériau actif négatif pour une batterie au lithium rechargeable de la revendication 1, ladite surface spécifique BET, mesurée selon la description, étant d'environ 0,5 m²/g à 10 m²/g.

4. Matériau actif négatif pour une batterie au lithium rechargeable de l'une quelconque des revendications 1 à 3, lesdites nanoparticules de Si possédant une forme sphérique.

5. Matériau actif négatif pour une batterie au lithium rechargeable de l'une quelconque des revendications 1 à 4, ledit composite Si-carbone comprenant des particules secondaires qui sont des nanoparticules de Si agglomérées.

6. Matériau actif négatif pour une batterie au lithium rechargeable de la revendication 5, ledit carbone amorphe recouvrant une surface des particules secondaires.

7. Matériau actif négatif pour une batterie au lithium rechargeable de la revendication 5 ou 6, ledit carbone amorphe étant chargé entre les nanoparticules de Si.

8. Matériau actif négatif pour une batterie au lithium rechargeable de l'une quelconque des revendications 1 à 7, ledit carbone amorphe recouvrant une surface des nanoparticules de Si.

9. Matériau actif négatif pour une batterie au lithium rechargeable de l'une quelconque des revendications 1 à 8, lesdites nanoparticules de Si possédant un diamètre de particules d'environ 10 nm à environ 200 nm.

10. Matériau actif négatif pour une batterie au lithium rechargeable de l'une quelconque des revendications 1 à 9, une largeur totale à mi-hauteur, FWHM(111) d'un pic de diffraction au niveau d'un plan (111) trouvé par diffraction des rayons X des particules de Si à l'aide d'un rayon CuKα pouvant être d'environ 0,3 degré (°) à environ 7 degrés (°).

11. Matériau actif négatif pour une batterie au lithium rechargeable de l'une quelconque des revendications 1 à 10, ledit matériau actif négatif possédant un diamètre de particules, mesuré selon la description, inférieur ou égal à environ 40 µm.

12. Matériau actif négatif pour une batterie au lithium rechargeable de l'une quelconque des revendications 1 à 11, ledit rapport de mélange des nanoparticules de Si et du carbone amorphe étant d'environ 8:2 à environ 2:8 en rapport de poids.

13. Batterie au lithium rechargeable, comprenant :
une électrode négative (20) comprenant le matériau actif négatif de l'une des revendications 1 à 12;
une électrode positive (10) ; et
un électrolyte.
